# EUROPEAN PATENT APPLICATION

(11) **EP 1 076 223 A2**
(43) Date of publication of application: **14.02.2001**
(21) Application number: 00114829.5
(22) Date of filing: 11.07.2000
(51) Int. Cl.: G01C 21/34, G08G 1/0968

(54) **Direction display device**

(30) Priority: 09.08.1999 JP 22522699
(71) Applicant: Murakami Corporation, Shizuoka-shi, Shizuoka, 422-8569 (JP)
(72) Inventor: Akiyoshi, Kobayashi, Hamamatsu-shi, Shizuoka, 432-8021 (JP); Hidenori, Sato, Fujieda-shi, Shizuoka, 426-0061 (JP)
(74) Representative: Dallmeyer, Georg, Dipl.-Ing.

(57) **Abstract**

A direction display device (10) used, for example, in a vehicle includes sensors (14 to 17) such as Hall elements which are disposed about a magnet (12) such as a magnetic needle. A signal processing circuit (21) processes detection outputs of the sensors (14 to 17) and detects direction of the magnet (12) relative to a reference direction such as advancing direction of a vehicle. A display (40) displays the detected direction of the magnet (12).

## Description

This invention relates to a direction display device and, more particularly, to a direction display device capable of performing direction display with excellent visibility in an inexpensive manner.

For knowing direction, a generally employed method is to detect direction of earth magnetism. As devices for detecting direction of earth magnetism, known in the art are magnets and flux-gate type magnetic sensors. There is also another method for knowing direction that utilizes GPS (global positioning system) used, for example, as a car navigation system.

The method using a magnet is simple and convenient but, since a magnet is generally small, it has no good visibility during driving when it is mounted in a car. Moreover, at night, it is hard to look at unless it is lighted up. Since direction can be recognized only by placing the magnet in a horizontal posture and looking down on it from above, it is hard to see the magnet and recognize the direction instantaneously. Further, since the magnet must be disposed at a place where it is not affected by ambient magnetism and it is easy to see it, the place where the magnet can be disposed is very limited. Furthermore, when the magnet is mounted in a vehicle, the magnetic needle tends to swing due to swaying of the vehicle and this adds to difficulty in seeing the magnet.

The flux-gate type magnetic sensor is relatively expensive and requires a complex signal processing. The GPS is expensive and requires also a complex signal processing. Hall elements are inexpensive magnetic sensors but it is difficult to detect weak magnetism such as earth magnetism with the Hall elements.

It is, therefore, an object of the invention to provide a direction display device which has solved the above described problems of the prior art direction display devices and is capable of performing direction display with excellent visibility in an inexpensive manner.

For achieving the above described object of the invention, there is provided a direction display device comprising a magnet, a detection section for detecting direction of the magnet relative to a reference direction (e.g., forward direction) at a place where the magnet is disposed, and a display section for displaying the direction of the magnet relative to the reference direction or direction of the reference direction on the basis of the detection by the detection section.

According to the invention, since the magnet and the display section are provided separately, the display section can be provided in a desired size and posture whereby direction can be displayed with excellent visibility.

By disposing the sensors and the display separately and connecting them by means of an electric cable, the display can be disposed at a position where good visibility is available while the magnet can be disposed at a position where the magnet is hardly influenced by ambient magnetism and, therefore, freedom of selection of a mounting position is broadened and both excellent visibility and accurate display can be realized.

By constructing the display with a light emitting device such as a transmitting type display having backlight, a light emitting diode type display, a liquid crystal display having backlight, a CRT display and a fluorescent tube, the display can be seen easily at night. In this case, by detecting quantity of surrounding light with a light sensor and controlling luminance (brightness) of the light emitting display in such a manner that luminance of the light emitting display is increased when the quantity of surrounding light is relatively large and luminance of the light emitting display is decreased when the quantity of surrounding light is relatively small, good visibility is available during day and night.

By providing, in the detection section, the variation restricting circuit (e.g., an averaging circuit or time constant circuit) which restricts frequent variation in the detection output, frequent swinging of display caused by swaying can be prevented.

According to the invention, since the signal processing unit can be constructed in a simpler manner than a device using the flux-gate type magnetic sensor and GPS, the direction display device can be constructed inexpensively.

The detection section may comprise sensors provided at a predetermined interval about axis of rotation of the magnet, each of said sensors being capable of detecting that a specific portion of the magnet points to the sensor. In this case, the sensors may consist of magnetic sensors which are sensitive to magnetic poles of the magnet in a manner to discriminate its north pole from its south pole.

In a case where a reflector type optical sensor is used, the magnet may be formed in the form of a disk or is provided with a disk-like member concentrically with the axis of rotation of the magnet, one surface of the disk-like magnet or the disk-like member is divided in the circumferential direction in an area having relatively high reflectance and an area having relatively low reflectance, and the sensors may consist of photo-reflectors which irradiate light on said one surface of the disk-like magnet or the disk-like member and receive reflected light.

In a case where a transmitting type optical sensor is used, the magnet may be formed in the form of a disk or is provided with a disk-like member concentrically with the axis of rotation of the magnet, the disk-like magnet or the disk-like member is divided in the circumferential direction in an area which transmits light and an area which interrupts light, and the sensors may consist of photo-interrupters which irradiate light from one surface of the disk-like magnet or the disk-like member and receive transmitted light.

The detection section may comprise an examination circuit which detects direction of the magnet or direction of the reference direction on the basis of the detection output of the sensors.

The display may be constructed of a device which displays the direction of the magnet or the direction of the reference direction in graphic display. Alternatively, the display may be constructed of a device which displays the direction of the reference direction (e.g., vehicle advancing direction) in letters.

The direction display device of the invention has broad applications and is particularly suitable for use in a vehicle.

The direction display device used in a vehicle comprises a magnet, sensors for detecting direction of the magnet relative to a reference direction of the vehicle (e.g., advancing direction), a signal processing circuit for processing output signals of the sensors to produce information representing the direction of the magnet relative to the reference direction of the vehicle or information representing direction of the reference direction of the vehicle, and a display for displaying the direction of the magnet relative to the reference direction of the vehicle or the direction of the reference direction of the vehicle on the basis of the information from the signal processing circuit.

In this case, the sensors, signal processing circuit and display may be interconnected through an electric cable, the display being disposed in a front part of a driver's seat in a cabin of the vehicle where good visibility is available and the magnet being disposed at a position which is at a distance from the display and is hardly influenced by ambient magnetism. By this arrangement, both good visibility and accurate display can be realized.

Preferred embodiments of the invention will be described below with reference to the accompanying drawings.

In the accompanying drawings,
Fig. 1 is a block diagram showing the entire system of an embodiment of the direction display system made according to the invention;
Fig. 2 is a view schematically showing an example of the direction display device mounted in a vehicle with the inside of the vehicle being seen from behind;
Fig. 3 is a plane view showing an example of arrangement of sensors 14 to 17 of Fig. 1 in case the sensors are made of magnetic sensors;
Fig. 4 is a graph showing an example of change in sensor output characteristics with respect to the advancing direction of the vehicle in case the magnetic sensors 14 to 17 of Fig. 3 are made of Hall elements;
Fig. 5 is a circuit diagram showing an example of the examination circuit 34 of Fig. 1 in case the sensor output of Fig. 4 is used;
Fig. 6 is a circuit diagram showing another example of the examination circuit 34 of Fig. 1 in case the sensor output of Fig. 4 is used;
Fig. 7 is a plane view showing another example of arrangement of eight magnetic sensors about the magnet 12 of Fig. 1;
Fig. 8 is a graph showing an example of change in sensor output characteristics with respect to the advancing direction of the vehicle in case magnetic sensors 88 to 95 of Fig. 7 are made of Hall elements;
Fig. 9 is a plane view showing an example of a rotating portion and arrangement of sensors 14 to 17 of Fig. 1 in case the sensors are made of photo-reflectors;
Fig. 10 is a plane view showing another example of the rotating portion and arrangement of sensors 14 to 17 in case the sensors are made of photo-reflectors;
Fig. 11 is a sectional view schematically showing the photo-reflectors 14 to 17 of Figs. 9 and 10;
Figs. 12A, 12B and 12C are plane views showing examples of relation between the advancing direction of the vehicle and light receiving and non-receiving states of the photo-reflectors 14 to 17 shown in Figs. 9 and 10;
Fig. 13 is a plane view showing an example of a rotating portion and arrangement of photo-interrupters in case the sensors of Fig. 1 are made of photo-interrupters;
Fig. 14 is a plane view showing relation between the advancing direction of the vehicle and light receiving and non-receiving states of the photo-interrupters 14 to 17 in the structure of Fig. 13;
Fig. 15 is a front view showing an example of the display 40 of Fig. 1;
Fig. 16 is a circuit diagram showing an example of display driver circuit 38 and an example of luminance control circuit 44 of Fig. 1 in case the display 40 of Fig. 15 is used;
Fig. 17 is a front view showing another example of the display 40 of Fig. 1;
Fig. 18 is a front view showing another example of the display 40 of Fig. 1;
Fig. 19 is a front view showing another example of the display 40 of Fig. 1; and
Fig. 20 is a front view showing still another example of the display 40 of Fig. 1.

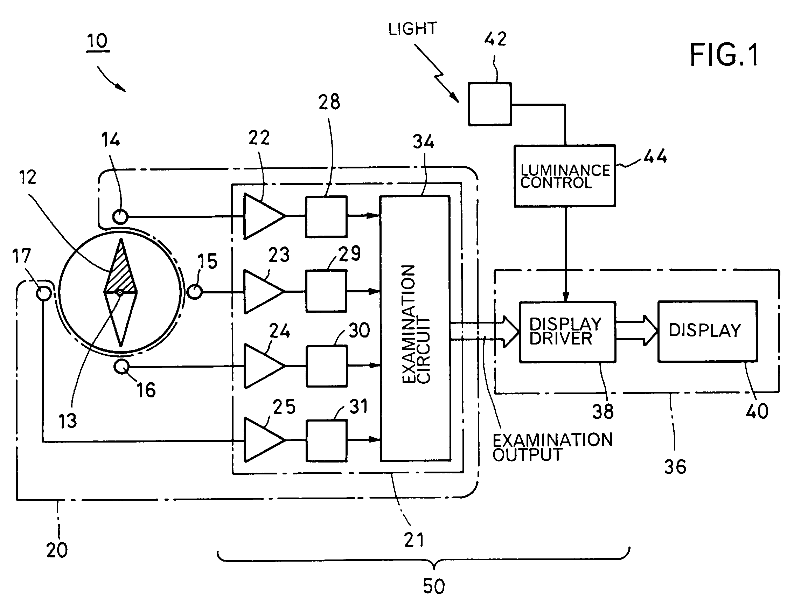

Fig. 1 is a block diagram showing the entire system of the direction display device of the invention.

A direction display device 10 has a magnet (magnetic needle) 12. The magnet 12 is disposed substantially horizontally and points always to the north under the influence of earth magnetism. In a stationary portion about an axis of rotation 13 of the magnet 12 are fixedly provided a plurality (four in the example of Fig. 1) of sensors 14 to 17 at an equal interval, each of the sensors 14 to 17 being capable of detecting that a specific portion (e.g., north pole or south pole) of the magnet 12 points to the sensor. These sensors 14 to 17 can be made of magnetic sensors or optical sensors as will be described later.

Detection outputs of these sensors 14 to 17 are transmitted to a signal processing circuit 21 which, together with the sensors 14 to 17, constitutes a detection section 20 and amplified by amplifiers 22 to 25 to a proper level. The detection output thereafter are supplied to variation restricting circuits 28 to 31 (e.g., averaging circuits or time constant circuits) where frequent variation in the level is restricted and then are applied to an examination circuit 34. The examination circuit 34 examines direction which the magnet 12 points to (i.e., relative direction to the directions where the sensors 14 to 17 are disposed) or direction of the reference direction (e.g., advancing direction) on the basis of the processed detection outputs of the sensors 14 to 17 and delivers an examination result to a display section 36.

The display section 36 includes a display driver circuit 38 and a display 40. The display 40 may be constructed of a device which displays direction of the magnet 12 or direction of the reference direction in graphic display. The display 40 may also be constructed of a device which displays direction of the reference direction in letters. If the display is constructed with a light emitting device such as a transmitting type display having backlight, a light emitting diode type display, a liquid crystal display having backlight, a CRT display and a fluorescent tube, the display can be seen easily during day and night. The display 40 may also be constructed of a mechanical display such as one which displays direction with a needle simulating the magnetic needle rotated by a motor. The display driver circuit 38 performs controls and driving for displaying the direction of the magnet or the direction of the reference direction which has been detected by the examination circuit 34 in accordance with the construction and display system of the display 40.

A light sensor 42 detects quantity of surrounding light (light of the external environment) in case the display 40 is constructed of a light emitting display. A luminance control circuit 44 controls luminance of the display 40 in accordance with the detected quantity of surrounding light. When the quantity of surrounding light is relatively large, luminance is increased and, when the quantity of surrounding light is relatively small, luminance is decreased. This provides good visibility during day and night.

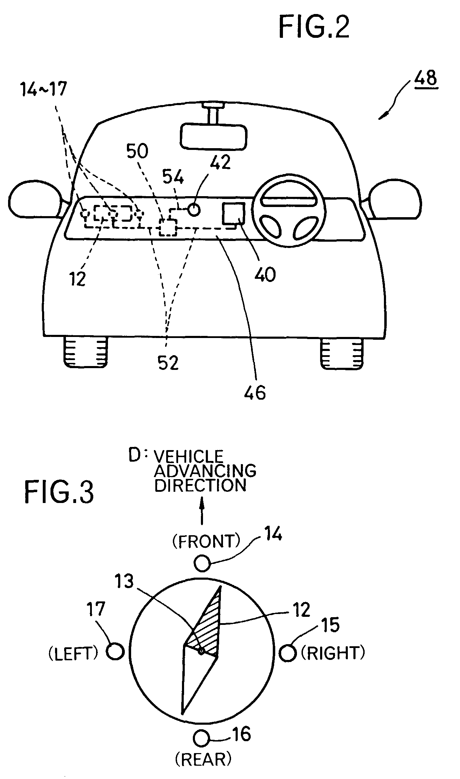

An example in which the direction display device of Fig. 1 is mounted in a vehicle is shown in Fig. 2. The magnet 12 is disposed horizontally at a place in, for example, a dashboard 46 where the magnet 12 is hardly influenced by ambient magnetism. The sensors 14 to 17 are disposed about the magnet 12 in predetermined directions with respect to the advancing direction of the vehicle 48 (i.e., the reference direction) in such a manner that the directions of the places where the sensors 14 to 17 are disposed as viewed from the axis of rotation 13 of the magnet 12 will have predetermined relation to the advancing direction of the vehicle 48. In an instrument panel of the dash board 46 is provided the display 40 facing the driver at a position where it is easy to see by the driver. A circuit section 50 (including the signal processing circuit 21, display driver circuit 38 and luminance control circuit 44 etc. of Fig. 1) is provided separately from the sensors 14 to 17 and the display 40 and the circuit section 50 is connected to the sensors 14 to 17 and the display 40 by means of electric cables 52. The light sensor 42 is disposed, for example, on the surface of the dashboard 46 to detect surrounding light. The light sensor 42 is connected to the circuit section 50 by means of an electric cable 54.

A specific example of the direction display device 10 of Fig. 1 will now be described.

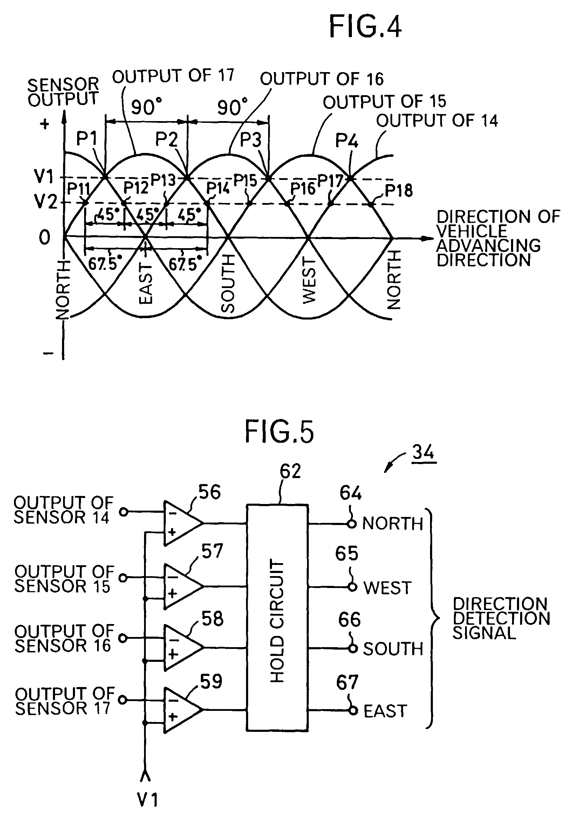

Fig. 3 is a plane view showing an example of arrangement of the sensors 14 to 17 in case these sensors 14 to 17 are made of magnetic sensors. In this example, the direction display device is assumed to be mounted in a vehicle and the sensors 14 to 17 are fixedly disposed in such a manner that directions of the sensors 14 to 17 as viewed from the axis of rotation 13 of the magnet 12 become respectively front direction, right direction, rear direction and left direction of the vehicle. The magnetic sensors 14 to 17 are sensitive to magnetic poles of the magnet 12 so as to discriminate its north pole and south pole (it may be sensitive only to the north pole or the south pole) and made of, e.g., Hall elements. The Hall elements produce a higher output voltage as the flux density crossing the Hall elements is larger. An example of change in the sensor output with respect to direction of the advancing direction D (reference direction) of the vehicle in case the magnetic sensors 14 to 17 are made of Hall elements is shown in Fig. 4. An example of the examination circuit 34 of Fig. 1 in this case is shown in Fig. 5. Comparators 56 to 59 have their reference level set at level V1 at points P1 to P4 at which adjacent characteristic curves cross each other, input detection outputs of the sensors 14 to 17 and output a comparison output "0" as a direction detection signal when the detection output exceeds the reference level V1. A hold circuit 62 holds a preceding direction detection signal and output it until a new direction detection signal is supplied from another comparator and, when the new direction detection signal has been output from the other comparator, switches the signal it holds to the new direction detection signal and outputs it. The hold circuit 62 thereby produces the direction detection signal "0" selectively from either one of output terminals 64 to 67 corresponding to direction of the advancing direction D of the vehicle, said output terminals 64 to 67 corresponding to directions (north, west, south and east) provided by dividing all directions equally in four. Scopes of directions of the advancing direction D of the vehicle indicated by the direction detection signals provided by the respective output terminals 64 to 67 are shown in the following Table 1.

**Table 1**

| Output terminal | Scope of direction |
|---|---|
| 64 | 90° (north ± 45° ) |
| 65 | 90° (west ± 45° ) |
| 66 | 90° (south ± 45° ) |
| 67 | 90° (east ± 45° ) |

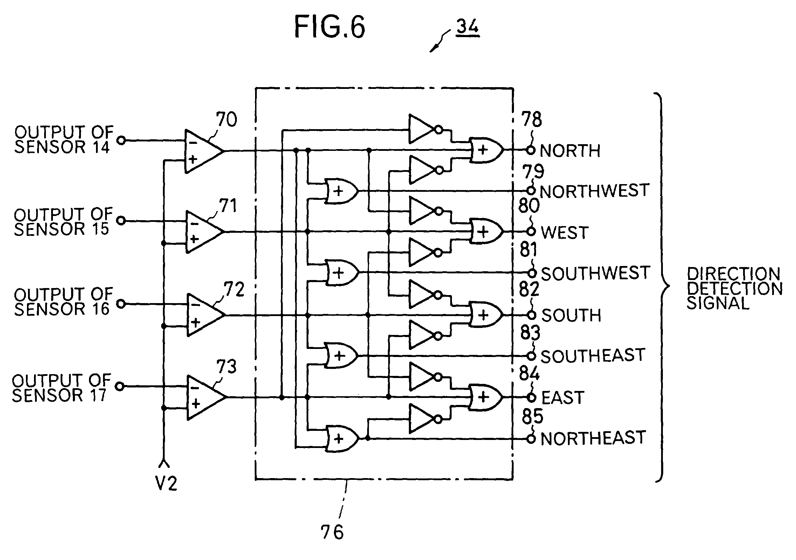

By setting the reference level of the comparators at level V2 which crosses points P11, P12, P13, ...... , P18 of adjacent characteristic curves in Fig. 4 which are located at an equal interval of 45° , directions provided by dividing all directions equally in eight can be detected. An example of the examination circuit 34 is shown in Fig. 6. Comparators 70 to 73 have their reference level set at level V2, input detection outputs of the sensors 14 to 17 and output a comparison output "0" as a direction detection signal when the detection output exceeds the reference level V2. A logic circuit 76 receives outputs of the comparators 70 to 73, performs logic operation on these outputs to examine a direction corresponding to the advancing direction D of the vehicle in directions provided by dividing all directions equally in eight and outputs a direction detection signal "0" selectively from a corresponding one of output terminals 78 to 85 corresponding to the respective directions. Scopes of directions of the advancing direction D of the vehicle indicated by the direction detection signals provided by the respective output terminals 78 to 85 are shown in the following Table 2

**Table 2**

| Output terminal | Scope of direction |
|---|---|
| 78 | 45° (north ± 22,5° ) |
| 79 | 45° (northwest ± 22,5° ) |
| 80 | 45° (west ± 22,5° ) |
| 81 | 45° (southwest ± 22,5° ) |
| 82 | 45° (south ± 22,5° ) |
| 83 | 45° (southeast ± 22,5° ) |
| 84 | 45° (east ± 22,5° ) |
| 85 | 45° (northeast ± 22,5° ) |

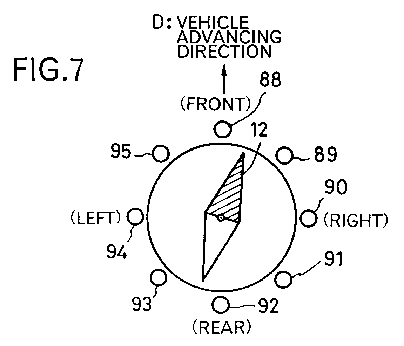

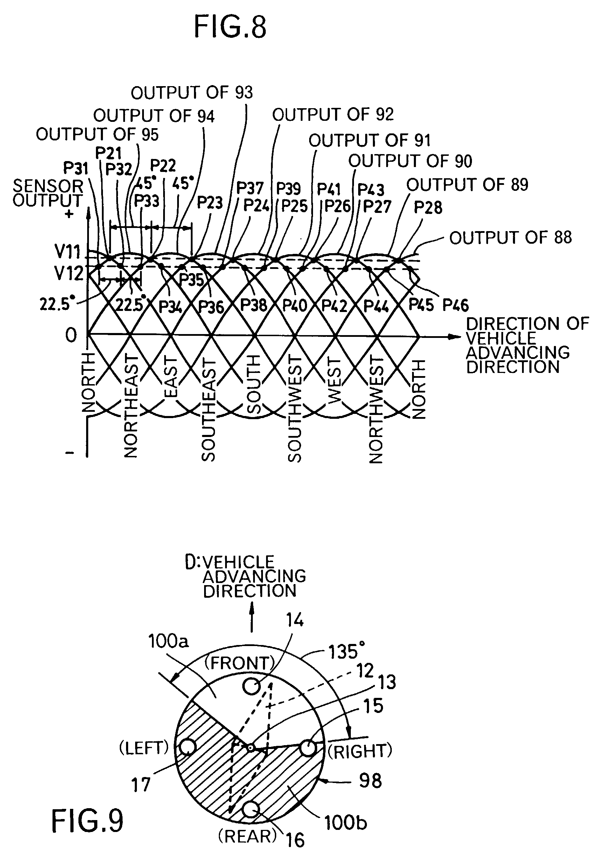

Another example of arrangement of magnetic sensors is shown in the plane view of Fig. 7. Eight magnetic sensors 88 to 95 are fixedly disposed at an equal interval about the axis of rotation 13 of the magnet 12. In the case of mounting the direction display device in a vehicle, these sensors 88 to 95 are disposed in such a manner that directions of the sensors 88, 89, 90, 91, 92, 93, 94 and 95 as viewed from the axis of rotation 13 of the magnet 12 become respectively front direction, front right direction, right direction, rear right direction, rear direction, rear left direction, left direction and front left direction of the vehicle. The magnetic sensors 88 to 95 are sensitive to magnetic poles of the magnet 12 so as to discriminate its north pole and south pole and may be made, for example, of Hall elements. An example of change in the sensor output with respect to direction D of the advancing direction of the vehicle in case the magnetic sensors 88 to 95 are made of Hall elements is shown in Fig. 8.

By setting the reference level of the comparators at level V11 of points P21 to P28 at which adjacent characteristic curves of Fig. 8 cross each other and applying detection outputs of the magnetic sensors 88 to 95 to an examination circuit of a construction similar to the examination circuit 34 of Fig. 5 (but having eight channels), a direction detection signal indicating a direction corresponding to the advancing direction D of the vehicle in the directions provided by dividing all directions equally in eight is produced.

Similarly, by setting the reference level of the comparators at level V12 at which points P31 to 46 crossing adjacent characteristic curves of Fig. 8 are disposed at an equal interval of 22.5° , and applying detection outputs of the magnetic sensors 88 to 95 to an examination circuit of a construction similar to the examination circuit 34 of Fig. 6 (but having sixteen channels), a direction detection signal indicating a direction corresponding to the advancing direction D of the vehicle in the directions provided by dividing all directions equally in sixteen is produced.

A specific example of a case where the sensors 14 to 17 in the direction display device 10 of Fig. 1 are made of optical sensors will now be described.

Description will first be made about a case where the optical sensors 14 to 17 are made of photo-reflectors. Fig. 9 shows the structure of the rotating portion and arrangement of photo-reflectors 14 to 17. A disk-like member 98 made of, e.g., a non-magnetic material is mounted concentrically on a magnet 12 and the magnet 12 and the disk-like member 98 are rotated integrally. The surface of the disk-like member 98 is divided in the circumferential direction in an area 100a which is of high reflectance and an area 100b which is of low reflectance. The area 100a of high reflectance is made by forming a white or metallic luster surface on a sector ranging over ±67.5° (135° in all area) on both sides of a magnetic pole (the north pole in this example). The area 100b of low reflectance is made by forming a black surface on the remaining portion of 225° .

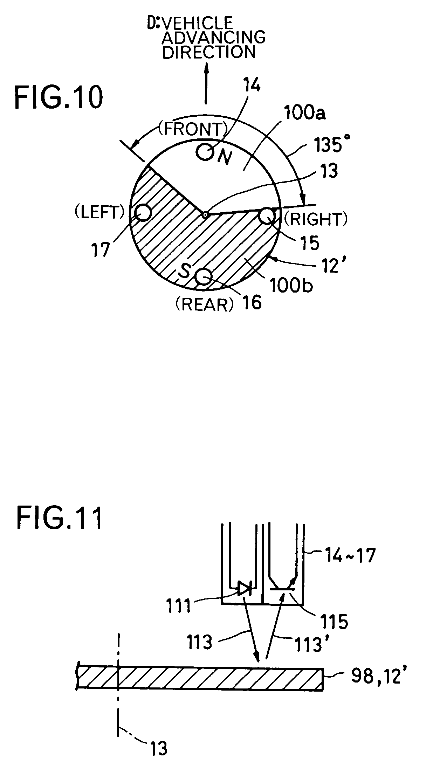

Instead of mounting the disk-like member 98 on the magnet 12, the magnet 12 may be constructed, as shown in Fig. 10, as a disk-like magnet 12' the surface of which is divided in an area 100a of high reflectance and an area 100b of low reflectance in the same manner as in the disk-like member 98 of Fig. 9.

In Figs. 9 and 10, the photo-reflectors 14 to 17 are fixedly disposed in the stationary part at an equal interval about the axis of rotation 13 at positions where the sensors 14 to 17 face the surface of disk-like member 98 or the disk-like magnet 12' but are not in contact with the surface of the disk-like member 98 or the disk-like magnet 12'. In case these photo-reflectors 14 to 17 are mounted in a vehicle, they are fixedly disposed in such a manner that the directions of the photo-reflectors 14 to 17 as viewed from the axis of rotation 13 become respectively front direction, right direction, rear direction and left direction of the vehicle.

A vertical section of the photo-reflectors 14 to 17 are schematically shown in Fig. 11. The photo-reflectors 14 to 17 irradiate light 113 emitted by a light emitting element 111 such as a light emitting diode on the surface of the disk-like member 98 or the disk-like magnet 12' and receive reflected light 113' with a light receiving element 115 such as a photo-transistor. A light receiving output of the light receiving element 115 changes depending upon whether the light 113 reaches the area 100a of high reflectance or the area 100b of low reflectance.

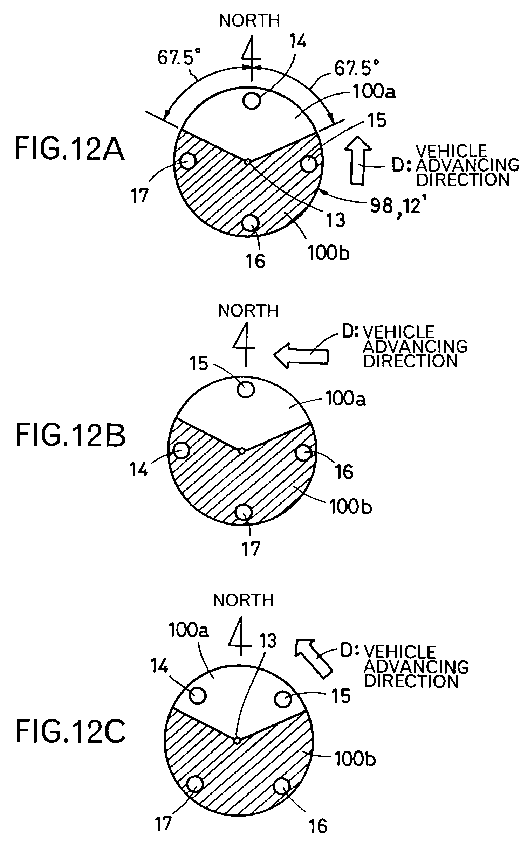

Relation between the advancing direction D of the vehicle and light receiving/non-receiving states of the sensors 14 to 17 in the structure of Figs. 9 and 10 will be described with reference to Fig. 12. Fig. 12A shows a state in which the vehicle is running exactly to the north. In this state, the sensor 14 only becomes the light receiving state. Fig. 12B shows a state in which the vehicle has turned to the left by 90° from the state of Fig. 12A and is now running exactly to the west. In this state, the sensor 15 only becomes the light receiving state. Fig. 12C shows a state in which the vehicle has turned to the left by 45° from the state of Fig. 12A and is now running in the northwest direction. In this state, the sensors 14 and 15 become the light receiving state. Relation between the vehicle advancing direction D and light receiving/non-receiving states of the sensors 14 to 17 is shown in the following Table 3. In this table, the mark ○ represents a sensor which is receiving light and the mark X represents a sensor which is not receiving light.

**Table 3**

| Advancing direction D | sensor 14 | sensor 15 | sensor 16 | sensor 17 |
|---|---|---|---|---|
| North ± 22.5° | ○ | X | X | X |
| Northwest ± 22.5° | ○ | ○ | X | X |
| West ± 22.5° | X | ○ | X | X |
| Southwest ± 22.5° | X | ○ | ○ | X |
| South ± 22.5° | X | X | ○ | X |
| Southeast ± 22.5° | X | X | ○ | ○ |
| East ± 22.5° | X | X | X | ○ |
| Northeast ± 22.5° | ○ | X | X | ○ |

According to Table 3, each of directions provided by dividing all directions equally in eight can be discriminated.

Description will now be made about a case where the optical sensors 14 to 17 are made of photo-interrupters.

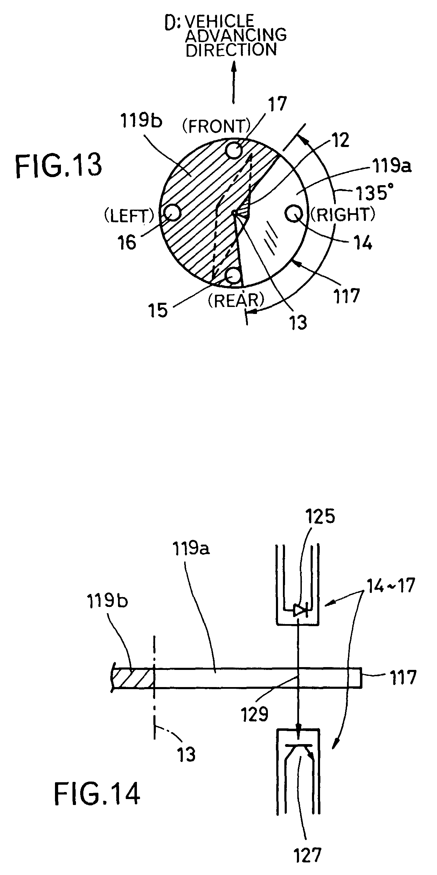

Fig. 13 shows an example of the structure of the rotating portion and arrangement of the photo-interrupters 14 to 17. On the magnet 12 is mounted concentrically a disk-like member 117 which is made of a transparent resin substrate or a transparent glass substrate. The magnet 12 and the disk-like member 117 are rotated integrally. The disk-like member 117 is divided in the circumferential direction in a light transmitting area 119a and a light interrupting area 119b. The light transmitting area 119a is made by retaining a transparent sector ranging over ±67.5° (135° in all sector area) on both sides of a position which is rotated by 90° from a magnetic pole of the magnet 12 excluding the position of the magnet 12. The light interrupting area 119b is formed by making the remaining portion opaque with a coating or seal member. The light transmitting area 119a may alternatively be formed by an aperture or a chipped rim formed in the disk-like member 117.

The photo-interrupters 14 to 17 are fixedly disposed in the stationary part at an equal interval about the axis of rotation 13 at positions where the photo-interrupters 14 to 17 face the surface of disk-like member 117 but are not in contact with the surface of the disk-like member 117. In case these photo-interrupters 14 to 17 are mounted in a vehicle, they are fixedly disposed in such a manner that the directions of the photo-interrupters 14 to 17 as viewed from the axis of rotation 13 become respectively right direction, rear direction, left direction and a front direction of the vehicle (the positions of the sensors 14 to 17 are rotated by 90° in conformity with rotation of the light transmitting area 119a by 90° ).

A vertical section of the photo-interrupters 14 to 17 is shown schematically in Fig. 14. Each of the photo-interrupters 14 to 17 is composed of a light emitting element 125 such as a light emitting diode and a light receiving element 127 such as a photo-transistor which are disposed opposite to each other with the disk-like member 117 between. Light 129 emitted from the light emitting element 125 passes through the light transmitting area 119a and is received by the light receiving element 127 whereas light 129 is interrupted by the light interrupting area 119b.

Relation between the advancing direction D of the vehicle and light receiving/non-receiving states of the sensors 14 to 17 in the structure of Fig. 13 is the same as the relation shown in Table 3 with respect to Figs. 9 and 10. Therefore, according to the structure of Fig. 13, each of directions provided by dividing all directions in eight can be discriminated. In case the structures of Figs. 9, 10 and 13 are used, the examination circuit 34 may be constructed in the manner shown in Fig. 6.

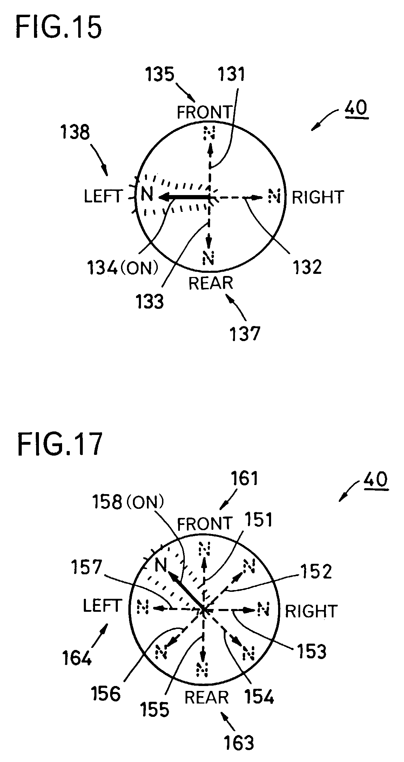

A specific example of the display 40 shown in Fig. 1 will now be described. The display 40 of Fig. 15 indicates which direction as viewed from the vehicle among four directions provided by dividing all directions in four is the direction of the magnet 12 (north in this example). In the display 40, arrows indicating the front, right, rear and left directions of the vehicle and the character "N" indicating the north are displayed by display elements 131 to 134 such as a light emitting diode type display, transmitting type display with backlight and fluorescent tube. In the directions indicated by the arrows, characters 135 to 138 meaning "front", "right", "rear" and "left" indicating the respective directions relative to the vehicle advancing direction D are constantly displayed by lighting. Among the display elements 131 to 134, one which has been judged to be the north by the examination circuit 34 (Fig. 1) is lighted and lighting of the other display elements is off. Fig. 15 is an example in which the display element 134 is lighted which indicates that the left direction of the vehicle advancing direction D is north, that is, the vehicle advancing direction D is east (more exactly, a direction within east ± 45° ).

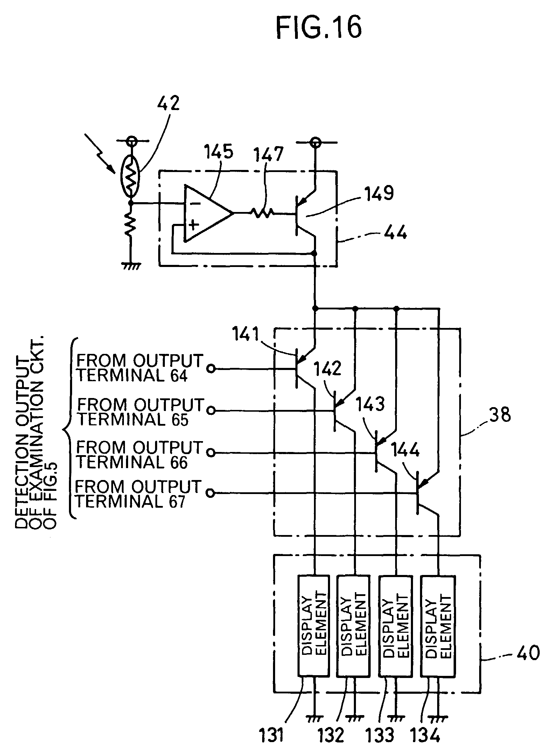

An example of the display driver circuit 38 in case the display 40 of Fig. 15 is used is shown in Fig. 16. The display driver circuit 38 is composed of transistors 141 to 144 supplying drive power to the display elements 131 to 134. The transistors 141 to 144 are respectively driven by outputs from the output terminals 64 to 67 of the examination circuit 34 of Fig. 5 to light one of the display elements 131 to 134 corresponding to the direction which has been detected by the examination circuit 34 to be the direction of the magnet 12.

Drive voltage of the transistors 141 to 144 is variably controlled by the luminance control circuit 44. The luminance control circuit 44 is composed of an operational amplifier 145, a resistor 147 and a transistor 149, and a light sensor 42 (CdS in this example) which detects quantity of surrounding light is connected to an inversion input of the operational amplifier 145. According to the structure of the luminance control circuit 44 of Fig. 16, since resistance of CdS decreases when it is bright and increases when it is dark, the voltage at the inversion input of the operational amplifier 145 increases when it is bright in the surroundings and voltage or current supplied to the display elements 131 to 134 thereby increases with resulting increase in luminance. Conversely, when it is dark in the surroundings, voltage at the inversion input of the operational amplifier 145 decreases and the drive voltage of the display driver circuit 38 thereby decreases and voltage or current supplied to the display elements 131 to 134 decreases with resulting decrease in luminance. By this arrangement, good visibility of the direction display device becomes available during day and night.

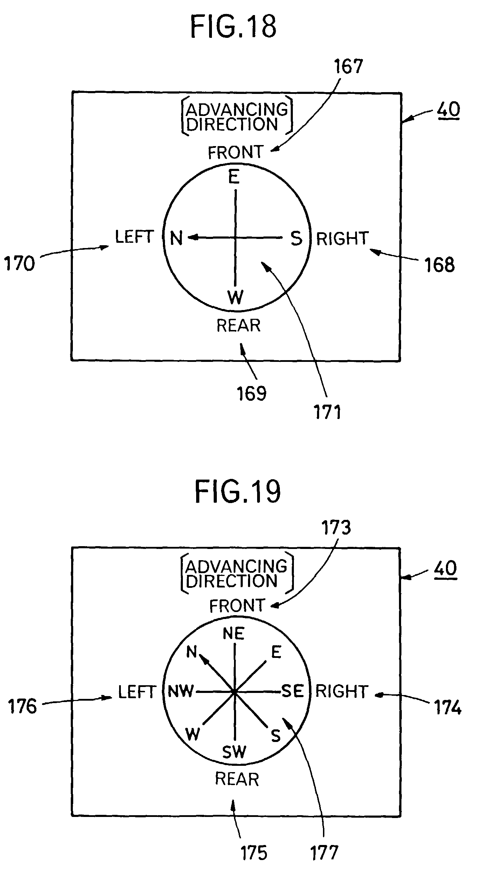

Another example of the display 40 is shown in Fig. 17. This display 40 indicates which direction is north as viewed from the vehicle among directions provided by dividing all directions in eight. In the display 40, arrows indicating the front, front right, right, rear right, rear, rear left, left and front left directions of the vehicle and the character "N" indicating the north are displayed by display elements 151 to 158 such as a light emitting diode type display, transmitting type display with backlight and fluorescent tube. In the directions indicated by the arrows, characters 161 to 164 meaning "front", "right", "rear" and "left" indicating the respective directions relative to the vehicle advancing direction D are constantly displayed by lighting. Among the display elements 151 to 158, one which has been judged to be the north by the examination circuit 34 is lighted and lighting of the other display elements is off. Fig. 17 is an example in which the display element 158 is lighted which indicates that the front left direction of the vehicle advancing direction D is north, that is, the vehicle advancing direction D is northeast (more exactly, a direction within northeast ± 22.5° ).

In case the display 40 of Fig. 15 is used, the display driver circuit 38 may be constructed in the same manner as the one shown in Fig. 16 (except that the drive channels are eight) and the display elements 151 to 158 may be driven by outputs of the output terminals 78 to 85 of the examination circuit 34 shown in Fig. 6.

Another example of the display 40 is shown in Fig. 18. In this display 40, direction of the vehicle advancing direction D is directly displayed by displaying all directions of the vehicle. The display 40 is constructed of a liquid crystal display with backlight, CRT display (a display of a car navigation system may be commonly used), a fluorescent tube or the like. On the screen of the display 40, characters 167 to 170 indicating directions such as "front", "left", "rear" and "right" relative to the vehicle advancing direction D are fixedly displayed in the peripheral portion of the screen. In the central portion of the screen, a direction display 171 comprising characters such as "N", "E", "S" and "W" indicating directions provided by dividing all directions in four is rotatably displayed. A direction display shown at the position indicated as the front direction of the vehicle indicates direction of the vehicle advancing direction D. In the example of Fig. 18, the display 40 indicates that the vehicle is running to the east. In case the display 40 of Fig. 18 is used, the output of the examination circuit 34 of Fig. 5, for example, is applied to the display driver circuit 38 and the display driver circuit 38 controls the display 40 to perform corresponding display in response to the output of the examination circuit 34.

Another example of the display 40 is shown in Fig. 19. The display 40 is constructed of a liquid crystal display with backlight, CRT display (a display of a car navigation system may be commonly used) or the like and displays direction provided by dividing all directions in eight. On the screen of the display 40, characters 173 to 176 indicating directions such as "front", "left", "rear" and "right" relative to the vehicle advancing direction D are fixedly displayed in the peripheral portion of the screen. In the central portion of the screen, a direction display 177 comprising characters such as "N", "NE", "E", "SE", "S", "SW", "W" and "NW" indicating directions provided by dividing all directions in eight is rotatably displayed. A direction display shown at the position indicated as the front direction of the vehicle indicates direction of the vehicle advancing direction D. In the example of Fig. 19, the display 40 indicates that the vehicle is running to the northeast. In case the display 40 of Fig. 19 is used, the output of the examination circuit 34 of Fig. 6, for example, is applied to the display driver circuit 38 and the display driver circuit 38 controls the display 40 to perform corresponding display in response to the output of the examination circuit 34.

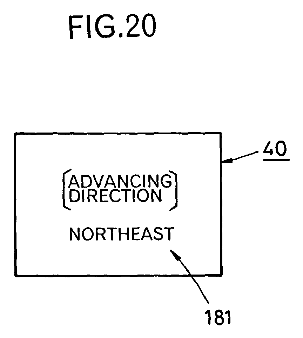

A still another example of the display 40 is shown in Fig. 20. The display 40 is constructed of a liquid crystal display with backlight, CRT display (a display of a car navigation system may be commonly used) or the like and displays direction which has been detected as the vehicle advancing direction D by means of a direction display 181 using characters. In case the display 40 of Fig. 20 is used, the output of the examination circuit 34 of Fig. 5 or Fig. 6, for example, is applied to the display driver circuit 38 and the display driver circuit 38 controls the display 40 to perform corresponding display in response to the output of the examination circuit 34.

In the above described embodiments, the invention has been described as being applied to a vehicle. The invention, however, is applicable to uses other than a vehicle. In case the direction display device is used in a vehicle, a result of examining direction can be utilized commonly for other purpose such as an auxiliary sensor in a car navigation system.

## Claims

1. A direction display device comprising:
a magnet;
a detection section for detecting direction of the magnet relative to a reference direction at a place where the magnet is disposed; and
a display section for displaying the direction of the magnet relative to the reference direction or direction of the reference direction on the basis of the detection by the detection section.

2. A direction display device as defined in claim 1 wherein the detection section comprises sensors provided at a predetermined interval about axis of rotation of the magnet, each of said sensors being capable of detecting that a specific portion of the magnet points to the sensor.

3. A direction display device as defined in claim 2 wherein said sensors consist of magnetic sensors which are sensitive to magnetic poles of the magnet in a manner to discriminate its north pole from its south pole.

4. A direction display device as defined in claim 2 wherein said magnet is formed in the form of a disk or is provided with a disk-like member concentrically with the axis of rotation of the magnet, one surface of the disk-like magnet or the disk-like member is divided in the circumferential direction in an area having relatively high reflectance and an area having relatively low reflectance, and
said sensors consist of photo-reflectors which irradiate light on said one surface of the disk-like magnet or the disk-like member and receive reflected light.

5. A direction display device as defined in claim 2 wherein said magnet is formed in the form of a disk or is provided with a disk-like member concentrically with the axis of rotation of the magnet, the disk-like magnet or the disk-like member is divided in the circumferential direction in an area which transmits light and an area which interrupts light, and
said sensors consist of photo-interrupters which irradiate light from one surface of the disk-like magnet or the disk-like member and receive transmitted light.

6. A direction display device as defined in any of claims 2 to 5 wherein said detection section comprises an examination circuit which examines direction of the magnet or direction of the reference direction on the basis of the detection output of the sensors.

7. A direction display device as defined in any of claims 1 to 7 wherein said detection section comprises a variation restricting circuit which restricts frequent variation in the detection output.

8. A direction display device as defined in any of claims 1 to 7 wherein said display section comprises a display which displays the direction of the magnet or the direction of the reference direction in graphic display.

9. A direction display device as defined in any of claims 1 to 8 wherein said display section comprises a light-emitting display which performs the display by emission of light.

10. A direction display device as defined in claim 9 further comprising:
a light sensor for detecting quantity of surrounding light; and
a luminance control circuit for controlling luminance in response to the detection output of the light sensor in such a manner that luminance of the light-emitting display is increased when the quantity of surrounding light is relatively large and luminance of the light-emitting display is decreased when the quantity of surrounding light is relatively small.

11. A direction display device as defined in any of claims 1 to 10 which is used in a vehicle.

12. A direction display device which is used in a vehicle comprising:
a magnet;
sensors for detecting direction of the magnet relative to a reference direction of the vehicle;
a signal processing circuit for processing output signals of the sensors to produce information representing the direction of the magnet relative to the reference direction of the vehicle or information representing direction of the reference direction of the vehicle; and
a display for displaying the direction of the magnet relative to the reference direction of the vehicle or the direction of the reference direction of the vehicle on the basis of the information from the signal processing circuit.

13. A direction display device as defined in claim 12 wherein said sensors, signal processing circuit and display are interconnected through an electric cable;
said display being disposed in a front part of a driver's seat in a cabin of the vehicle; and
said magnet is disposed at a distance from the display.
